# FASCICULE DE BREVET EUROPEEN

(11) **EP 0 336 808 B1**
(45) Date de publication et mention de la délivrance du brevet: **31.08.1994**
(21) Numéro de dépôt: 89400776.4
(22) Date de dépôt: 20.03.1989
(51) Int. Cl.: B21J 15/42

(54) **Agrafe d'épinglage à mécanisme intérieur**
Einsteckbare Klammer mit innenliegendem Mechanismus
Insertable clamp having interior mechanism

(30) Priorité: 01.04.1988 FR 8804392
(43) Date de publication de la demande: 11.10.1989
(73) Titulaire: AEROSPATIALE Société Nationale Industrielle, 75781 Paris Cédex 16 (FR)
(72) Inventeur: Duffaud, Jacques, F-31700 Blagnac (FR)
(74) Mandataire: Bonnetat, Christian

(56) Documents cités:
- EP-A- 0 161 334
- EP-A- 0 198 105
- FR-A- 887 862
- US-A- 4 671 718

## Description

La présente invention concerne les agrafes d'épinglage pour tôles ou plaques analogues.

On sait que, en préparation à l'assemblage définitif de tôles, par exemple par rivetage, on procède généralement à un assemblage temporaire desdites tôles, au moyen, d'agrafes d'épinglage traversant des trous en regard pratiqués dans celles-ci.

De telles agrafes d'épinglage de tôles sont par exemple décrites dans le brevet français FR-A-789 945 du 13 Mai 1935, dans son certificat d'addition FR-A-48 048 du 13 Mai 1936, ou encore dans le brevet français FR-A-1 492 310 du 8 Juillet 1966.

Les agrafes d'épinglage connues comportent :
- une face d'appui, destinée à venir au contact de la face extérieure d'une desdites tôles externes de l'ensemble de tôles ;
- au moins un élément allongé, destiné à traverser des trous en regard pratiqués dans les tôles dudit ensemble et pourvu d'un bec d'accrochage ; et
- un mécanisme pour engendrer un déplacement relatif, de direction longitudinale, entre ledit élément allongé et ladite face d'appui, et, éventuellement, un déplacement transversal dudit bec d'accrochage, afin que lesdites tôles puissent être pressées entre ladite face d'appui et ledit bec d'accrochage, qui est alors accroché derrière la face extérieure de l'autre tôle externe dudit ensemble, en bordure du trou correspondant.

Généralement, dans ces agrafes d'épinglage connues, ladite face d'appui est la face frontale d'un corps traversé longitudinalement par une tige filetée et portant ledit élément allongé à son extrémité traversant ladite face frontale, tandis que ledit mécanisme comprend un écrou monté sur la tige filetée, à l'extérieur dudit corps du côté opposé à ladite face frontale de celui-ci, un ressort de pression étant monté prisonnier de ladite tige filetée, entre ledit écrou et ledit corps.

Ainsi, dans ces agrafes connues, ledit mécanisme, qui est essentiellement constitué de ladite tige filetée et dudit écrou, se trouve en saillie, du côté opposé audit élément allongé. Il en résulte donc que l'encombrement longitudinal desdites agrafes est important. Comme, de plus, la longueur de ladite tige filetée à l'extérieur dudit corps correspond à l'épaisseur de l'ensemble de tôles à assembler, on voit que les agrafes prévues pour des assemblages épais sont très longues.

Aussi, bien souvent, pour des raisons d'encombrement disponible, il est impossible d'utiliser des agrafes d'épinglage pour des assemblages épais et l'on doit réaliser l'assemblage temporaire à l'aide de vis, écrous et rondelles. Lorsque l'ensemble de tôles n'est pas accessible simultanément des deux côtés à un même opérateur, ce qui est par exemple le cas lorsqu'on réalise l'assemblage de la voilure d'un avion au fuselage de celui-ci, on est alors obligé d'avoir recours à deux opérateurs, respectivement situés de part et d'autre de l'assemblage et réalisant ledit assemblage à l'aide de boulons et d'écrous.

Par ailleurs, par le document EP-A-0198105, on connaît une agrafe destinée à l'épinglage d'un ensemble de tôles ou analogue comportant :
- un corps déterminant une face d'appui, destinée à venir au contact de la face extérieure d'une desdites tôles externes dudit ensemble ;
- au moins un élément allongé destiné à traverser des trous en regard pratiqués dans les tôles dudit ensemble et pourvu d'un bec d'accrochage ; et
- un mécanisme à vis et écrou pour engendrer un déplacement relatif de direction longitudinale, entre ledit élément allongé et ladite face d'appui, et, éventuellement, un déplacement transversal dudit bec d'accrochage, afin que lesdites tôles puissent être pressées entre ladite face d'appui et ledit bec d'accrochage, qui est alors accroché derrière la face extérieure de l'autre tôle externe dudit ensemble, en bordure du trou correspondant, ledit mécanisme comportant un premier noyau pouvant tourner et coulisser à l'intérieur dudit corps et pourvu d'un filetage avec lequel coopère un second noyau fileté, duquel ledit élément allongé est solidaire.

Dans ce dernier document, aucun ressort de pression n'est prévu.

La présente invention a pour objet de perfectionner l'agrafe mentionnée en dernier lieu, de manière à obtenir une agrafe d'épinglage dont la longueur soit faible, même lorsqu'elle est prévue pour des assemblages épais, et qui soit apte à maintenir constante la pression de serrage, malgré le déplacement relatif des tôles à serrer lié, en particulier, au fluage lent d'un film d'étanchéité qui peut être prévu entre celles-ci.

A cette fin, selon l'invention, l'agrafe pour l'épinglage d'un ensemble de tôles ou analogue, du type rappelé ci-dessus, est caractérisée en ce que des moyens élastiques sont disposés à l'intérieur dudit corps entre ledit premier noyau et ladite face d'appui.

Ainsi, on réduit fortement l'encombrement londigudinal des agrafes d'épinglage connues rappelées en premier lieu, tout en permettant la mise en place de moyens élastiques de pression.

On remarquera que cette disposition desdits moyens élastiques, qui n'est pas possible dans l'agrafe de EP-A-0198105, n'augmente pas l'encombrement de l'agrafe conforme à l'invention.

Avantageusement, pour éviter que ledit premier noyau qui est rotatif, soit au contact desdits moyens élastiques (fixes en rotation), on interpose une rondelle flottante entre ledit premier noyau et lesdits moyens élastiques.

Pour actionner aisément ladite agrafe, on prévoit une tête de manoeuvre solidaire dudit premier noyau et faisant saillie à l'extérieur dudit corps. On prévoit de plus des moyens pour éviter la rotation dudit corps.

Au moins un axe permet avantageusement de rendre prisonnier, de façon lâche, ledit premier noyau par rapport au corps.

Dans un mode de réalisation avantageux, ladite agrafe comporte au moins deux éléments allongés constitués par des lames élastiques ou analogues pourvues de becs d'accrochage opposés, ainsi qu'un écarteur desdites lames, lié à ladite face d'appui. Dans ce cas, ledit mécanisme est susceptible d'engendrer simultanément, le déplacement longitudinal desdits éléments allongés et le déplacement transversal desdits becs d'accrochage.

Les figures du dessin annexé feront bien comprendre comment l'invention peut être réalisée.

La figure 1 est une vue en coupe axiale d'une agrafe d'épinglage de type connu, à l'état détendu.

La figure 2 est une vue en coupe axiale d'un exemple de réalisation de l'agrafe d'épinglage conforme à l'invention, également à l'état détendu.

Les figures 3 et 4 illustrent l'agrafe d'épinglage conforme à l'invention, dans une position d'épinglage intermédiaire et dans la position d'épinglage définitive.

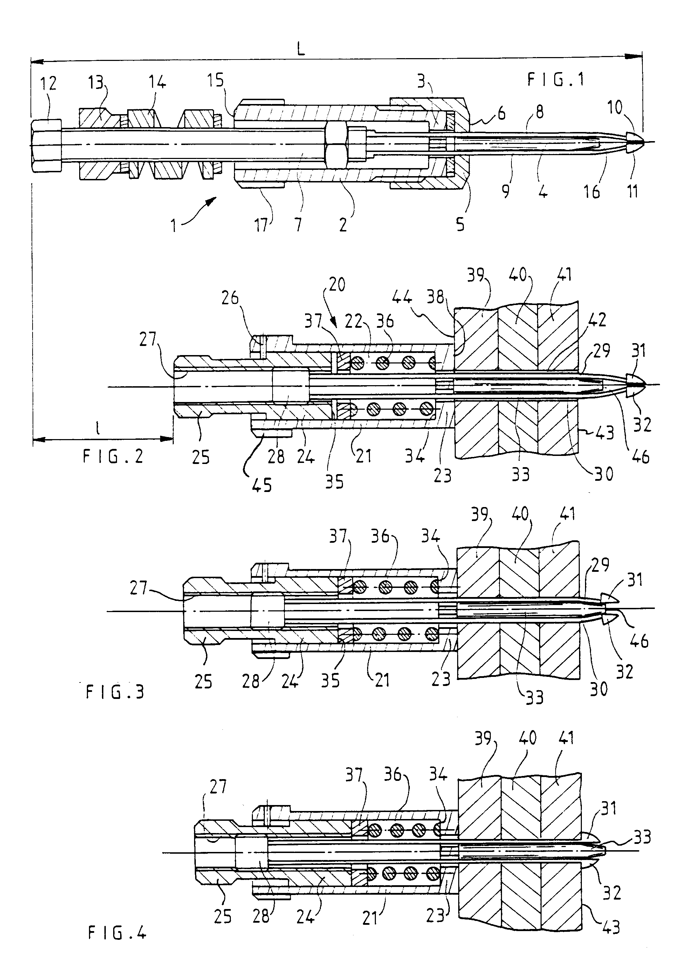

L'agrafe connue pour l'épinglage d'un ensemble de tôles et montrée par la figure 1, comporte un corps creux 2, obturé à l'une de ses extrémités par un fond percé 3. Une tige 4 est solidaire du fond 3 et fait saillie vers l'extérieur, du côté opposé audit corps 2. Un capuchon 5 recouvre l'extrémité du corps 2 voisine du fond 3 et est réalisé en une matière non susceptible de marquer lesdites tôles. Ce capuchon 5 comporte une face d'appui 6, recouvrant ledit fond 3.

A l'intérieur du corps 2 peut coulisser une tige filetée 7 solidaire à son extrémité en regard du fond 3, de deux lames élastiques 8 et 9, respectivement pourvues à leur extrémité libre de becs d'accrochage opposés 10 et 11.

Lesdites lames élastiques 8 et 9 traversent le fond 3 et la face d'appui 6 et sont disposées de part et d'autre de la tige 4. Grâce à la forme et à l'élasticité de ces lames, les becs 10 et 11 sont spontanément au contact l'un de l'autre, lorsque la tige 4 n'est pas disposée entre eux.

Du côté opposé aux lames élastiques 8 et 9, la tige filetée 7 est pourvue d'une tête de manoeuvre 12.

Par ailleurs, à l'extérieur du corps creux 2, un écrou 13 est monté sur la tige filetée 7. Un ressort hélicoïdal 14 est monté sur la tige filetée 7, entre l'écrou 13 et le corps 2. L'extrémité du ressort 14, opposée à l'écrou 13, est susceptible de prendre appui sur l'extrémité en regard 15 dudit corps 2.

Lorsque l'agrafe 1 de la figure 1 est à l'état détendu (position qui est représentée sur cette figure), les becs d'accrochage 10 et 11 sont au contact l'un de l'autre, en avant de l'extrémité 16 de la tige 4 et le ressort 14 n'est pas sous pression.

Maintenant, si à partir de cette position détendue, on imprime un mouvement relatif de rotation entre la tête de manoeuvre 12 et l'écrou 13 (le corps 2 étant bloqué en rotation grâce par exemple à des encoches 17 ménagées dans ledit corps), on tire la tige filetée 7 (et donc les lames élastiques 8 et 9) vers la gauche de la figure 1 et on comprime le ressort 14 entre l'écrou 13 et l'extrémité 15 du corps 2. De plus, au cours du déplacement relatif en translation qui en résulte entre le corps 2 et les lames élastiques 8 et 9, l'extrémité 16 de la tige 4 rencontre les becs d'accrochage 10 et 11 et s'introduit entre eux, en les écartant. L'écartement desdits becs d'accrochage 10 et 11 entraîne alors l'écartement radial desdites lames élastiques 8 et 9. Inversement, de façon réversible, on peut revenir à la position détendue par rotation relative de sens inverse entre l'écrou 13 et la tête de manoeuvre 12.

On conçoit donc aisément qu'il soit possible de serrer un empilage de tôles (non représentées) entre la face d'appui 6 et les becs d'accrochage écartés 10 et 11, après avoir introduit les lames élastiques 8 et 9 à travers un passage traversant lesdites tôles. La pression du serrage est alors assurée et maintenue par le ressort 14 comprimé entre l'écrou 13 et la face 15 du corps 2, même si un film d'une matière d'étanchéité (non représenté) est prévu entre lesdites tôles.

On remarquera cependant que l'encombrement longitudinal L de l'agrafe 1 est important, ce qui, comme cela a été expliqué ci-dessus, rend souvent impossible l'usage d'une telle agrafe.

L'agrafe 20, conforme à l'invention et montrée sur les figures 2 à 4, permet de remédier à cet inconvénient.

Cette agrafe 20 comporte un corps creux 21, dont la paroi interne 22 est cylindrique et est obturée à une extrémité par une paroi transversale 23. A l'intérieur du corps creux 21 est disposé un premier noyau cylindrique 24, à paroi extérieure lisse, pouvant tourner et coulisser par rapport à la paroi transversale 23. Le noyau cylindrique 24 est accessible, de l'extérieur du corps 21, par l'intermédiaire d'une tête de manoeuvre 25, faisant saillie par l'extrémité dudit corps creux 21 opposée à la paroi transversale 23. Un système d'axe 26, rend le noyau cylindrique 24 prisonnier, de façon lâche, du corps 21.

Le noyau cylindrique 24 est percé d'un alésage longitudinal fileté 27, dans lequel est engagé un second noyau fileté 28. Celui-ci est solidaire de lames élastiques 29 et 30, portant à leurs extrémités des becs d'accrochage 31 et 32. Les lames élastiques 29 et 30 et les becs 31 et 32 sont respectivement semblables aux lames 8 et 9 et aux becs 10 et 11 ci-dessus décrits. Les lames 29 et 30 traversent librement le fond 23. Une tige d'écartement 33, semblable à la tige 4, est solidaire du fond 23.

Entre la face interne 34 du fond 23 et l'extrémité interne 35 du premier noyau 24 est disposé un ressort 36. Une rondelle flottante 37 peut être interposée entre ladite extrémité interne 35 du noyau 24 et le ressort 36.

La face externe 38 de la paroi transversale 23 peut servir de face d'appui pour un empilage de tôles. Eventuellement, elle peut être recouverte d'un capuchon (non représenté) semblable au capuchon 5.

Lorsque l'on désire épingler un empilage de tôles accolées 39, 40, 41 percée de trous en regard formant un passage traversant 42, on introduit l'agrafe 20 à l'état détendu (voir la figure 2) dans ledit passage 42, de façon que les becs d'accrochage dépassent la face externe 43 de la tôle externe 41 et que la face externe 38 de la paroi transversale 23 s'appuie contre la face externe 44 de la tôle externe 39.

Puis, après blocage en rotation du corps 21, par exemple au moyen d'encoches 45 semblables aux encoches 17 et prévues à l'extrémité du corps 21, on actionne la tête de manoeuvre 25 pour que le noyau 24 tourne dans le sens pour lequel le noyau 28 est rétracté dans le noyau 24. Par suite, les becs 31 et 32 se rapprochent de l'extrémité 46 de la tige 33.

Lorsque, la rotation du noyau 24 se poursuivant, lesdits becs 31 et 32 rencontrent ladite extrémité 46 de la tige 33, ils s'écartent l'un de l'autre, en éloignant radialement les lames élastiques 29 et 30 (figure 3).

Si la rotation du noyau 24 est poursuivie, les becs 31 et 32 sont rapprochés de la tôle 41 et simultanément le noyau 24 est tiré vers la paroi 23. Par suite, le ressort 36 est progressivement comprimé entre la rondelle 37 et la paroi transversale 23 et les becs 31 et 32 viennent s'accrocher derrière le bord du passage 42, dans la tôle extérieure 41 (figure 4). Une pression de serrage constante, même en cas de mouvement relatif des éléments à serrer, est maintenue par l'action du ressort 36. On remarquera que, pour une capacité de serrage semblable, l'agrafe 20 de l'invention présente un encombrement longitudinal inférieur de l par rapport à l'agrafe connue 1.

Bien entendu, par rotation de sens inverse de la précédente, on peut ramener l'agrafe 20 dans l'état montré par la figure 2, pour la ressortir de l'assemblage de tôles 30, 40, 41.

## Revendications

1. Agrafe (20) destinée à l'épinglage d'un ensemble de tôles (39, 40, 41) ou analogue comportant :
- un corps (21) déterminant une face d'appui (38), destinée à venir au contact de la face extérieure (44) d'une desdites tôles externes (39) dudit ensemble ;
- au moins un élément allongé (29, 30), destiné à traverser des trous en regard (42) pratiqués dans les tôles dudit ensemble et pourvu d'un bec d'accrochage (31,32) ; et
- un mécanisme à vis et écrou pour engendrer un déplacement relatif de direction longitudinale, entre ledit élément allongé et ladite face d'appui, et, éventuellement, un déplacement transversal dudit bec d'accrochage, afin que lesdites tôles puissent être pressées entre ladite face d'appui (38) et ledit bec d'accrochage (31,32), qui est alors accroché derrière la face extérieure (43) de l'autre tôle externe (41) dudit ensemble, en bordure du trou correspondant, ledit mécanisme comportant un premier noyau (24) pouvant tourner et coulisser à l'intérieur dudit corps (21) et pourvu d'un filetage (27) avec lequel coopère un second noyau fileté (28), duquel ledit élément allongé (29, 30) est solidaire,
caractérisé en ce que des moyens élastiques (36) sont disposés à l'intérieur dudit corps (21) entre ledit premier noyau (24) et ladite face d'appui (38).

2. Agrafe selon la revendication 1,
caractérisée en ce qu'une rondelle flottante (37) est interposée entre ledit premier noyau (24) et lesdits moyens élastiques (36).

3. Agrafe selon l'une des revendications 1 ou 2,
caractérisée en ce que ledit premier noyau (24) comporte une tête de manoeuvre (25) faisant saillie à l'extérieur dudit corps (21).

4. Agrafe selon l'une des revendications 1 à 3,
caractérisée en ce qu'au moins un axe (26) permet de rendre prisonnier, de façon lâche, le premier noyau (24) par rapport au corps (21).

5. Agrafe selon l'une quelconque des revendications 1 à 4,
caractérisée en ce qu'elle comporte au moins deux éléments allongés constitués par des lames élastiques (29,30) ou analogues pourvues de becs d'accrochage opposés (31,32), ainsi qu'un écarteur (33) desdites lames, lié à ladite face d'appui.

## Claims

1. Clamp (20) intended for pinning an assembly of metal sheet (39, 40, 41) or the like including:
- a body (21) determining a bearing face (38) intended to come into contact with the outer face (44) of one of the said external metal sheets (39) of the said assembly;
- at least one elongate element (29, 30) intended to pass through opposing holes (42) formed in the metal sheets of the said assembly and provided with a fastening spur (31, 32); and
- a screw and nut mechanism for generating a relative displacement of longitudinal direction between the said elongate element and the said bearing face and, possibly, a transverse displacement of the said fastening spur so that the said metal sheets can be pressed between the said bearing face (38) and the said fastening spur (31, 32) which is therefore fastened behind the outer face (43) of the other external metal sheet (41) of the said assembly, on the border of the corresponding hole, the said mechanism including a first core (24) which can revolve and slide inside the said body (21) and provided with a screw thread (27) with which a second threaded core (28) to which the said elongate element (29, 30) is secured interacts,
characterized in that elastic means (36) are located inside the said body (21) between the said first core (24) and the said bearing face (38).

2. Clamp according to claim 1,
characterized in that a floating washer (37) is interposed between the said first core (24) and the said elastic means (36).

3. Clamp according to one of claims 1 or 2,
characterized in that the said first core (24) includes an operating head (25) projecting outside the said body (21).

4. Clamp according to one of claims 1 to 3,
characterized in that at least one pin (26) makes it possible to capture, loosely, the first core (24) with respect to the body (21).

5. Clamp according to any one of claims 1 to 4,
characterized in that it includes at least two elongate elements consisting of elastic strips (29, 30) or the like provided with opposing fastening spurs (31, 32) as well as a piece (33) for spacing the said strips, which is connected to the said bearing face.

## Patentansprüche

1. Klammer (20) zum Heften eines Pakets von Blechen (39,40,41) oder ähnlichem mit:
- einem Gehäuse (21) mit einer Auflagefläche (38), die mit der Außenseite (44) eines der äußeren Bleche (39) des Pakets in Berührung kommt;
- mindestens einem länglichen Teil (29,30), das durch einander gegenüberliegende Bohrungen (42) in den Paketblechen verläuft und eine Hakennase (31,32) hat; und
- einer mechanischen Vorrichtung mit Schraube und Mutter zur Erzeugung einer relativen Längsbewegung zwischen dem länglichen Teil und der Auflagefläche und eventuell einer Querbewegung der Hakennase, damit die Bleche zwischen der Auflagefläche (38) und der Hakennase (31,32) geklemmt werden können, die sich dann an der Außenseite (43) des anderen äußeren Blechs (41) des Pakets am Rand der entsprechenden Bohrung anhakt, wobei die mechanische Vorrichtung einen ersten Kern (24) hat, der sich im Gehäuse (21) drehen und gleiten kann und ein Gewinde (27) hat, mit dem ein zweiter Gewindekern (28) zusammenwirkt, der mit dem länglichen Teil (29,30) fest verbunden ist,
dadurch gekennzeichnet, daß elastische Mittel (36) innerhalb des Gehäuses (21) zwischen dem ersten Kern (24) und der Auflagefläche (38) angeordnet sind.

2. Klammer nach Anspruch 1,
dadurch gekennzeichnet, daß sich zwischen dem ersten Kern (24) und den elastischen Mitteln (36) eine lose Scheibe (37) befindet.

3. Klammer nach einem der Ansprüche 1 oder 2,
dadurch gekennzeichnet, daß der erste Kern (24) einen Bedienkopf (25) hat, der außen am Gehäuse (21) übersteht.

4. Klammer nach einem der Ansprüche 1 bis 3,
dadurch gekennzeichnet, daß der erste Kern (24) gegenüber dem Gehäuse (21) mit mindestens einem Bolzen (26) lösbar arretiert werden kann.

5. Klammer nach einem der Ansprüche 1 bis 4,
dadurch gekennzeichnet, daß sie mindestens zwei aus elastischen Zungen (29,30) oder ähnlichem bestehende längliche Teile mit einander entgegengesetzten Hakennasen (31,32) sowie eine mit der Auflagefläche verbundene Spreizvorrichtung (33) der Zungen hat.
